# EUROPEAN PATENT SPECIFICATION

(11) **EP 3 302 176 B1**
(45) Date of publication and mention of the grant of the patent: **17.04.2019**
(21) Application number: 16745152.5
(22) Date of filing: 08.06.2016
(51) Int. Cl.: A47B 96/06, F16B 12/20, F16B 12/46, F16B 13/06, F16B 12/10

(54) **CONNECTING DEVICE BETWEEN COMPONENTS OF A PIECE OF FURNITURE, METHOD FOR MANUFACTURING SAID DEVICE**
VERBINDUNGSVORRICHTUNG ZWISCHEN KOMPONENTEN EINES MÖBELSTÜCKS, VERFAHREN ZUR HERSTELLUNG DER BESAGTEN VORRICHTUNG
DISPOSITIF DE LIAISON ENTRE DES ÉLÉMENTS D'UN MEUBLE, ET PROCÉDÉ DE FABRICATION DUDIT DISPOSITIF

(30) Priority: 08.06.2015 IT UB20151039
(43) Date of publication of application: 11.04.2018
(73) Proprietor: CAR S.r.l., 35127 Padova (IT)
(72) Inventor: ROVOLETTO, Stefano, 35127 Padova (IT)
(74) Representative: Zermani, Umberto
(86) International application number: PCT/IB2016/053343
(87) International publication number: WO 2016/199024

(56) References cited:
- DE-U1- 29 804 267

## Description

### Technical Field

The present invention relates to a connecting device between components of a piece of furniture, a method and an apparatus for manufacturing said device.

### State of the art

In the production of furniture, and more generally of elements of furniture, it is known the use of connecting devices to connect the different components of furniture and tighten them, in particular via panels used as shelves or walls, in order to assemble the piece of furniture and/or to fix it in a room in the desired position.

In particular, the known connecting devices are those comprising a rod-shaped pin, fixed to its first end to a first of component of the piece of furniture, and an eccentric element, generally cylindrical shaped, which is inserted in a seat formed in a first component of the piece of furniture to engage a head of the rod protruding from the first component. The eccentric element is provided with coupling means of the tie rod head, so that as a consequence of the rotation of the eccentric element around its own axis, the rod is moved to the inside of the first connecting element, obtaining in this way the approach and the clamping of the two components of the piece of furniture.

This type of connecting device finds a preferred application in the union of a horizontal panel (shelf) with a vertical wall.

In one embodiment of the connecting device of the type indicated above, it is provided that the fastening of the tie rod in the seat of the first component if the piece of furniture is obtained by a coupling of the type with gusset.

In this case the end of the tie rod opposite to the eccentric head engaged in the element features a segment in enlarged section, typically with tapered profile, and the tie rod is received sliding inside a casing provided with a corresponding end radially expandable, so that the axial displacement of the rod caused by the rotation of the eccentric element determines the radial expansion of said end and its engagement in the seat of the component of the piece of furniture in which it is received.

The connecting devices of the type described above, however, have some drawbacks. A first drawback is the fact that, with the completed assembly, the eccentric element is visible in the second component of the piece of furniture.

Furthermore, the seat provided in the second component of the piece of furniture for the eccentric element housing has not negligible diameters, generally higher than 14 mm.

A second drawback of the connecting device according to the known technique is given by the fact that each connecting device is formed by at least two separate components, the eccentric element and the tie rod, which must be separately mounted on the respective components of the piece of furniture to be assembled.

This obviously involves a high possibility of loss of one of these components and a greater difficulty in their positioning in the assembly phase.

Moreover, the known devices have, by their nature, different structures and shapes depending on the thickness of the shutter of the piece of furniture, making impossible the standardization of the components impossible and thus considerably increasing the costs for the manufacturer.

The manufacturer therefore has to manage several codes both in the organization of the warehouse and during the preparation of the containers of the mounting hardware for the piece of furniture.

An example of prior art connecting devices is known from DE29804267.

### Object of the invention

The problem underlying the present invention is that of making a connecting device for furniture components which is structurally and functionally conceived to overcome the limitations described above with reference to the cited prior art, as well as to implement a method and to provide an apparatus for manufacturing the connecting device able to optimize the production both from a technical and economic point of view. In this context, it is an object of the invention to provide a universal connecting device, i.e. analogous for different thicknesses of the shutter, and compact, i.e. stockable as a single component.

Furthermore, object of the present invention is to provide a method and an apparatus for manufacturing said device making it possible to link the manufacturing quality and process efficiency.

Said objects are obtained by means of a connecting device according to one or more of claims 1 to 7 and by a method according to one or more of the claims from 8 to 15.

In particular, the device according to the present invention includes a casing extending along a longitudinal axis between a first end, capable of being received in a first seat obtained in a first component of said piece of furniture, and a second end, capable of being received in a second seat obtained in a second component of said piece of furniture, said casing comprising a first and a second radially expandable regions for engaging the furniture components in correspondence respectively of the first and of the second seat, a tie rod housed inside said casing with axial sliding power towards and from a locking position and shaped to determine a radial expansion of said first and second radially expandable regions of the casing when said tie rod is moved to said locking position and an eccentric element housed in said casing and arranged to engage a head of said tie rod in order to axially move said tie rod toward said locking position when said cam element is rotated around its main axis.

According to an aspect of the present invention, the casing includes a first and a second half-shell, both concave, extending along said longitudinal axis and rotatably connected to each other in correspondence of a mutual connecting line defining a tilting axis around which said half-shells can pivot between an open position, in which the half-shells are put side by side, and a closed position, in which the half-shells are reciprocally abutted in correspondence of their peripheral edges and the respective concavities define a housing space for said tie rod and said eccentric element. Advantageously, the presence of a monolithic casing capable of housing completely both the eccentric element and the tie rod makes it very easy both to the stock management of the device and its embodiment. Furthermore, the preparation of a "unitary" device, in which the tie rod and the eccentric element are combined, allows to make the device universal, which thus may be used indistinctly for several shutter thicknesses. Preferably, each half-shell comprises a housing portion of the eccentric element placed in correspondence of the second end, a half-part of said first radially expandable region placed in correspondence of the first end and a half-part of said second radially expandable region placed in correspondence of an intermediate zone between said first and said second end.

Advantageously, in this way the eccentric element is housed in the "head" of the device, allowing the positioning of the manoeuvring hole of the eccentric element in a distal position from the connecting edge between the shutters for the benefit of manoeuvrability.

According to the invention, the two half-shells are hinged to each other in correspondence of said second end, or of the housing portion of the eccentric element, allowing an easy assembly of the device.

In this regard, note that the half-shells comprise means for quick coupling adapted to keep them in closed position once approached, preferably interposed between the two radially expandable regions so as to define a seal in the most stressed area of the device.

Preferably, moreover, the first half-shell includes two radial protrusions obtained from sides opposite to the longitudinal axis Y, and mutually extending away to define a directional portion which can be inserted in a corresponding milling made in the first and/or in the second component of the piece of furniture.

Advantageously, the presence of protrusions on only one of the half-shells makes their position asymmetric, or such that the development of the protrusions does not intersect the median plane of the casing (i.e. the connecting plane between the two half-shells), obliging the user to mount the device correctly.

With reference to the method according to the present invention, it provides the following steps:
- Predisposition of the aforementioned casing with the two half-shells in open position, with the respective concavities preferably facing upwards.
- Provision of at least one tie rod;
- Provision of at least one eccentric element;
- Insertion of said eccentric element in said first half-shell, in correspondence of a predetermined portion of the housing;
- Insertion of the said tie rod in said half-shell;
- Coupling between a head of said tie rod and said eccentric element;
- Tilting of the second half-shell around said axis from said open position to a closed position, in which the half-shells are mutually abutted in correspondence of their peripheral edges and the respective concavities define a closed housing volume for said tie rod and said eccentric element.

Preferably, to further simplify the assembly of the device, the eccentric element is split in two combined/combinable halves which, in use, are preferably each housed in the housing portion of the respective half-shell.

Returning to the method, therefore, preferably the insertion of the eccentric element in the first half-shell comprises a step of insertion of the first half-part in the housing portion of the same and a step of coupling of the second half-part of the eccentric element with said first half-part.

In accordance with this, the insertion of the tie rod is interposed between the insertion of the first half and the coupling of the second half-part. More specifically, the insertion of the tie rod supports the tie rod in the first half-shell so that the head is housed in the said first half-part of the eccentric element and the coupling of the head of tie rod with the eccentric element is contextual to the coupling of the second half-part of the eccentric element with the first half-part.

In fact, the coupling of the two half-parts of the eccentric element delimits the housing space and the sliding of the head, creating the coupling.

Also disclosed is an apparatus for manufacturing the connecting device, preferably capable of implementing the steps of the method described above, and in particular including a supply station for said casing, a supply unit of the eccentric element and of the tie rod, an tilting station having at least a pusher member and a movement unit (preferably a rotary table) provided with at least a movable gripping element between said stations and configured to retain the first half-shell of the casing with the concavity facing upwards.

Advantageously, in this way, the machine performs in a simple and compact way all the steps of the method, manufacturing in a fast and accurate way the connecting device according to the present invention.

### Brief description of the drawings

The characteristics and the benefits of the invention will become more apparent from the following exemplary, and therefore non-limiting description of a preferred, and therefore not exclusive embodiment of a connecting device, of a method and of an apparatus for manufacturing said device as shown in the attached drawings, in which:

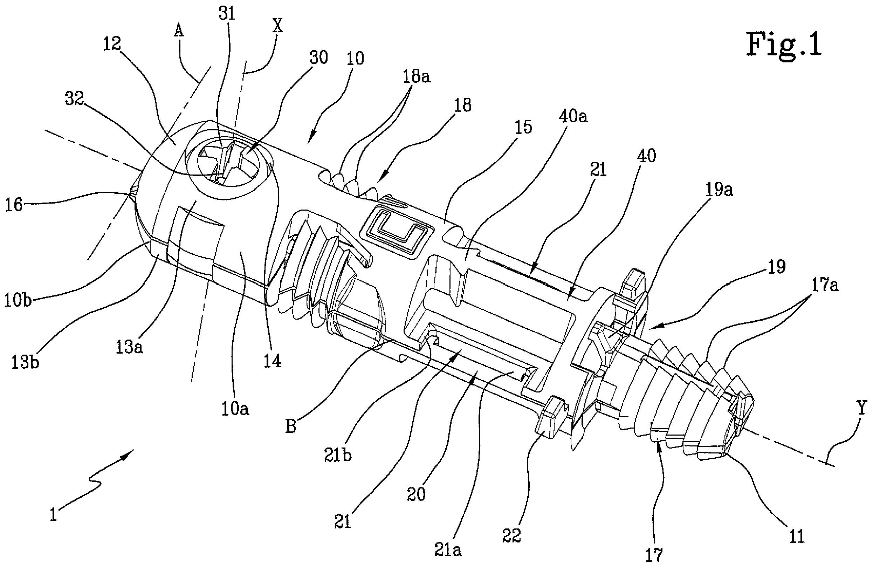

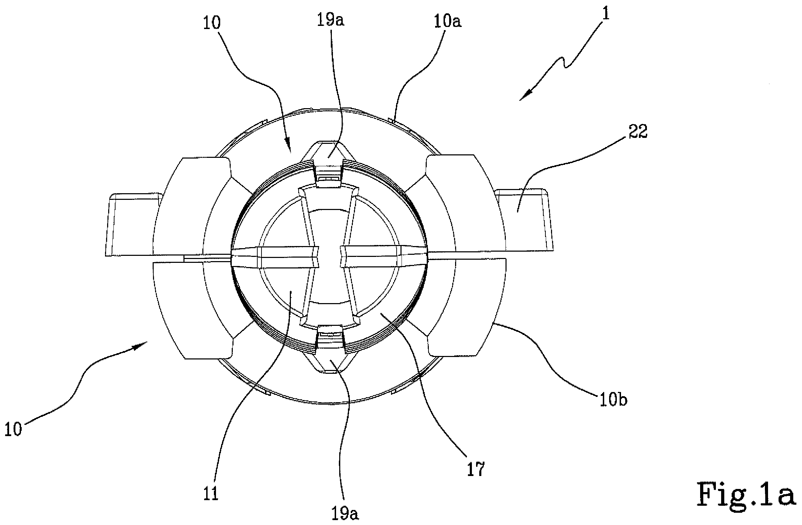

- Figures 1 and 1a show a perspective view and a bottom view of a connecting device according to the present invention,

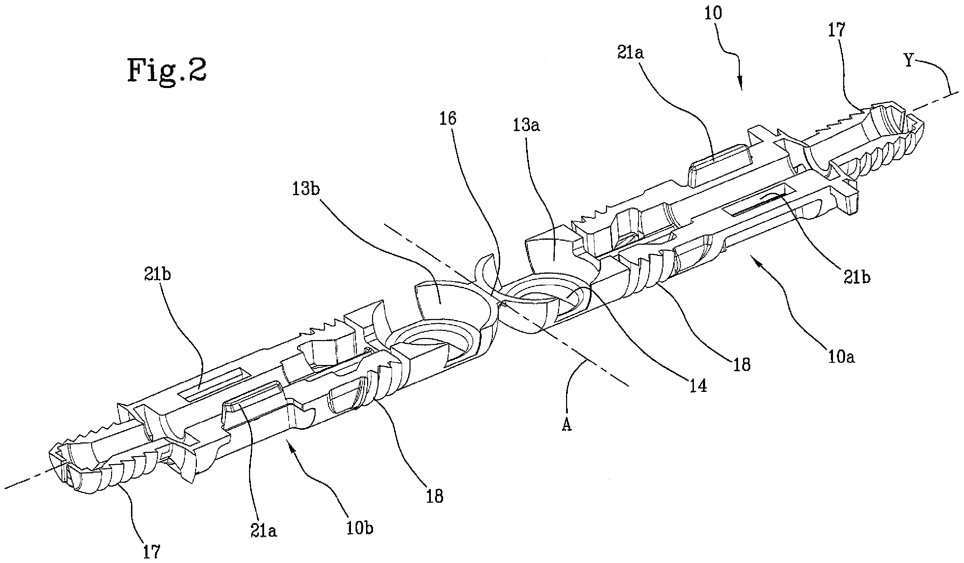

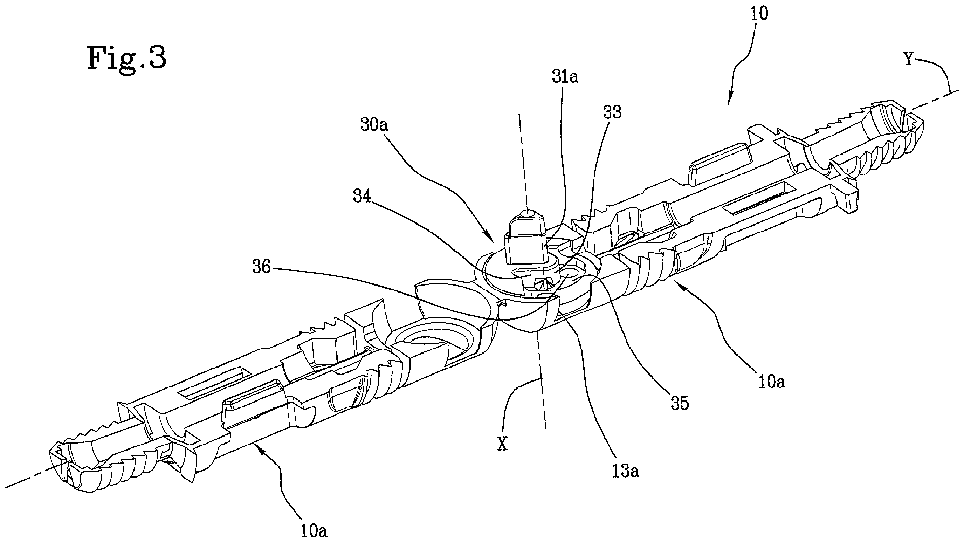

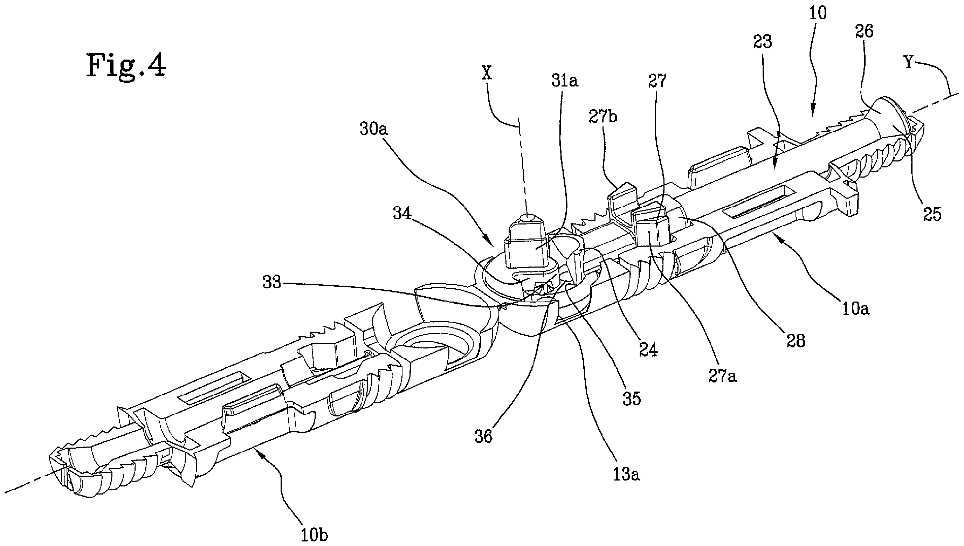

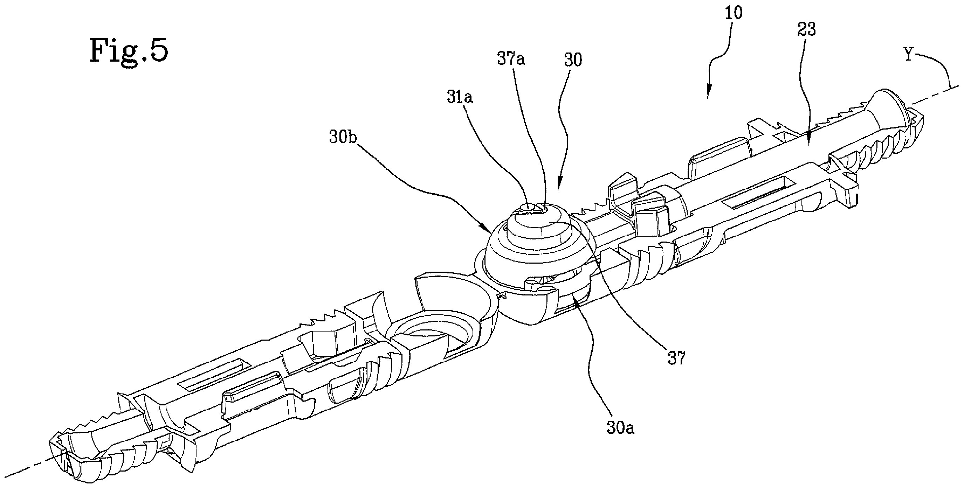

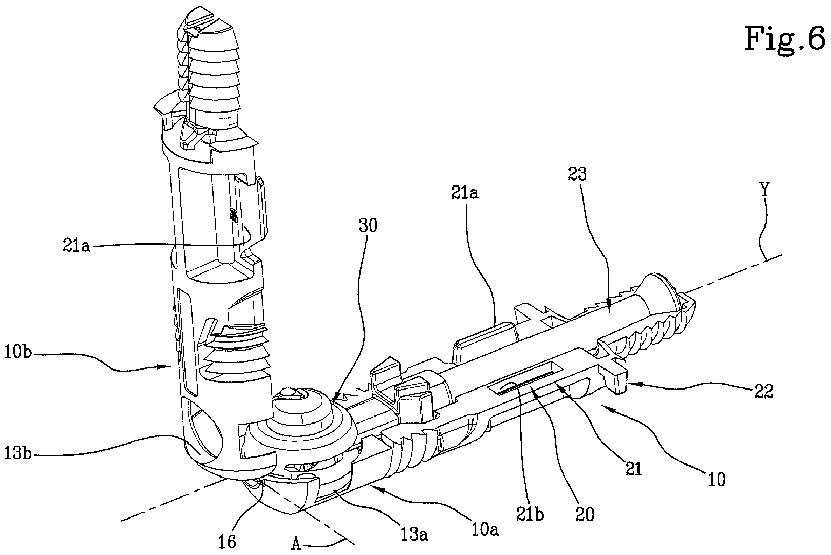

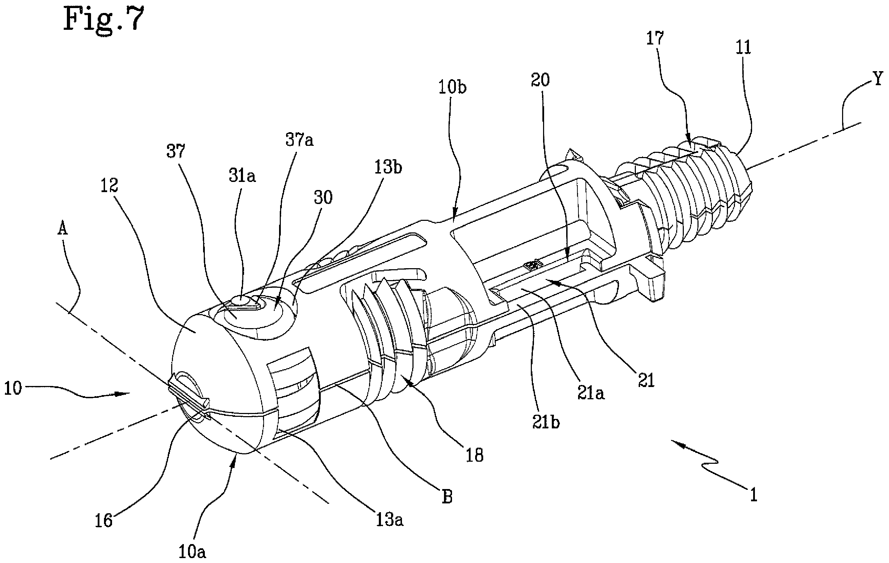

- Figures 2 to 7 illustrate the sequence of the steps of a preferred embodiment of the method according to the present invention;

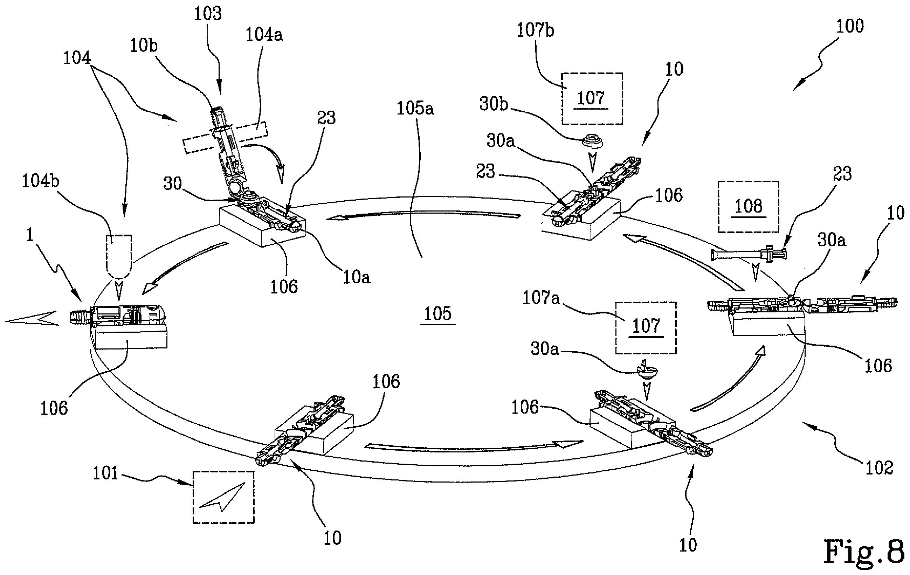

- Figure 8 shows schematically an apparatus for manufacturing the device of Figure 1 according to the present invention, during a sequence of operating steps;

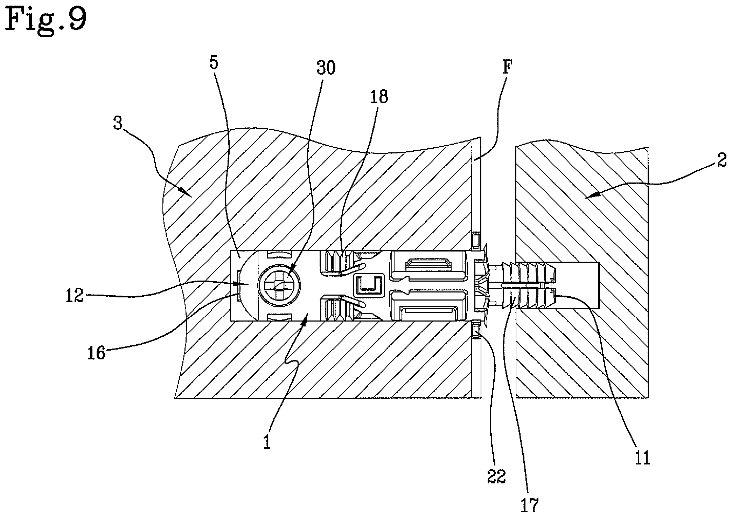

- Figure 9 shows a schematic view of the connecting device according to the present invention during the assembly.

### Detailed description of preferred embodiments of the invention

With reference to the appended figures, number 1 indicates a connecting device for furniture according to the present invention.

The connecting device 1 is arranged to mutually connect and tighten a first and a second component of a piece of furniture, respectively represented here in a generic manner by a first panel 2 and by a second panel 3, oriented in a perpendicular way to each other.

The panels are preferably made of wood-based material and have a thickness of between 12 mm and 30 mm, according to the most common construction standards in the furniture industry and furniture in general.

It is understood that the first and the second components of the piece of furniture can be made with different materials or shapes and can be positioned for the mutual coupling according to any other appropriate arrangement.

The connecting device 1 comprises a casing 10 inside which both a tie rod 20 and an eccentric element 30 of the tie rod 20 handling are accommodated.

The casing 10 develops along a longitudinal axis Y between a first end 11, capable of being received in a first seat 4 obtained in the first panel 2 of the piece of furniture 5 and a second end 12 capable of being received in a second seat 5 obtained in the second panel 3 of the piece of furniture. To secure the device to the seats 4, 5, the casing 10 comprises a first 17 and a second radially expandable region 18, respectively engageable with the walls of the first 4 and of the second seat 5.

Preferably, the first region 17 is defined by the first end 11 of the casing 10, and the second region 18 is defined by a median region 15 of the casing 10.

The first region 17 includes several tabs 17a, arranged side by side, separated by respective axial slots, so as to form a collar defining the first end 11 of the casing 10.

Preferably, the tabs 17a are articulated in oscillation around a respective end 17b of theirs facing the opposite side to the first end 11.

The second region 18 includes several tabs 18a, arranged on the diametrically opposite side of the median region 15 the casing 10, which are articulated in oscillation around a respective end 18b of theirs facing the first end 11.

Preferably, the outer surfaces of both tabs 17a and tabs 18a have a sawtooth profile.

Preferably, in correspondence of the first end 11, the casing 10 has a substantially cylindrical shape with circular section having a first diameter D1, while in correspondence of the second end 12 and a median region 15, the casing 10 has a substantially cylindrical shape with circular section having a second diameter D2 which is bigger than the first diameter D1. According to one aspect of the present invention, the casing 10 is formed by two half-shells 10a, 10b both concave and mutually coupling in such a way as to enclose (i.e. define the housing space for) the tie rod 20 and for the eccentric element 30.

More precisely, the casing 10 comprises a first 10a and a second half-shell 10b.

Each half-shell 10a, 10b therefore has a lateral surface bounded by a peripheral edge B and defining an elongated concavity extending along the longitudinal axis Y.

Each half-shell 10a, 10b comprises a portion of housing 13a, 13b for the eccentric element placed in correspondence of the second end 12, a half-part of said first radially expandable region 17 placed in correspondence of the first end 12 and a half-part of said second radially expandable region 18 placed in correspondence of the median region 15, or in an intermediate region between said first 11 and said second end 12.

Preferably, the portion of the housing 13a, 13b of the eccentric element of the first 10a or of the second half-shell 10b features at least a hole 14 or through opening in correspondence of the lateral surface. Said hole 14 or through opening defines an access to permit the movement of the eccentric element 30 by means of a manoeuvring tool (e.g. screwdriver).

Therefore, the eccentric element 30 is, in use, facing externally to said hole 14 or through opening with at least one portion engageable by the manoeuvring tool, preferably a receiving seat 32.

In accordance with the present invention, the first 10a and a second half-shell 10b are rotatably connected in correspondence of a mutual connecting line 16 (or hinge) defining a tilting axis A around which said half-shells 10a, 10b can pivot.

More precisely, the half-shells 10a, 10b have possibility to mutually pivot between an open position, in which they are put side by side, and a closed position, in which they are reciprocally abutted in correspondence of their peripheral edges B.

In the open position, the concavity of the half-shells 10a, 10b half-shells are in agreement, i.e. facing in the same direction.

On the contrary, in the closed position the concavity of the half-shells 10a, 10b are opposed and define the aforementioned housing space for the tie rod 20 and for the eccentric element 30.

Preferably, the connecting line 16 is placed in correspondence of the second end 12.

Therefore, the connecting line 16 (at least in open position) is interposed between the two housing portions 13a, 13b of the two half-shells 10a, 10b.

Preferably, such a connecting line 16 is oriented transversely to the longitudinal axis Y, more preferably perpendicularly to it.

This advantageously greatly simplifies both the construction of the casing and the assembly of the device.

In this regard, the casing 10 is made of plastic material, preferably by moulding, with the half-shells in open position, which are closed only during the assembly (as will be better clarified in the following).

Preferably, the two half-shells 10a, 10b comprise means for quick coupling 20 adapted to keep them in closed position.

The expression "quick coupling" defines any pressure connecting system (e.g. male-female), namely that as a result of a pressure it establishes a (reversible) hard restraining fastening between the two half-shells 10a, 10b.

Preferably, moreover, the means of quick coupling 20 are interposed between the first 17 and the second radially expandable region 18, in order to maximize the restraining effect between the two half-shells 10a, 10b.

In the preferred embodiment, the means of quick coupling 20 comprise at least one quick coupling 21 defined by an elastically deformable pawl 21a erecting from the first half-shell 10a and at least one corresponding receiving seat 21b of the pawl 21a obtained in the second half-shell 10b.

Preferably, the means of quick coupling 20 include two quick couplings 21 obtained from opposite sides of said longitudinal axis Y (i.e. the tie rod 23). In the preferred embodiment, the first half-shell 10a (or the second 10b) comprises at least one protrusion or radial tooth 22, i.e. protruding from the side wall away from the longitudinal axis Y.

More preferably, the first half-shell 10a (or the second 10b) includes two radial protrusions 22 obtained from sides opposite to the longitudinal axis Y, and mutually extending away to define a directional portion which can be inserted in a corresponding milling made in the first 2 and/or in the second component 3 of the piece of furniture.

Advantageously, in fact, the protrusions 22 being associated with only one half-shell 10a do not intersect the median plane of the casing 10, resulting in a central asymmetry of the device 1 and forcing the user to place the device 1 with predetermined orientation, avoiding mounting errors.

In this regard, preferably the second panel 3 of the piece of furniture has an elongated milling F formed in a coupling face with the second panel 2, in which the first seat 5 is made (or vice versa).

Such milling F is shaped to accommodate the protrusions 22, making the orientation of the device positioning univocal, and preventing the device from rotating around its longitudinal axis Y once inserted in the seat 5. The casing 10 further includes a provisional restraining element 19 arranged between the first 17 and the second radially expandable region 18 to allow the displacement along the longitudinal axis Y of the first region 17 compared to the second 18 from the mounting position towards a clamping position.

In the mounting position, the two radially expandable regions 17, 18 are each inserted in a respective seat 4, 5 of the components of the piece of furniture at a predetermined distance, while in the clamping position the two regions 17, 18 (radially expanded) are mutually approached, determining a clamping action between the two components 2, 3.

According to a preferred aspect of the invention, the provisional restraining element 19 is arranged in order to allow the translation only when the first region 17 is stressed towards the second one 18 with a minimum predefined axial force.

Preferably, this minimum axial force is defined by the axial force exerted by the tie rod 20 to obtain the radial expansion of the first region 17.

In other words, the provisional restraining element 19 is configured to preserve the mutual axial position between the first 7 and the second region 18 during the expansion of the first radially expandable region 17.

Preferably, the provisional restraining element 19 is configured to preserve the axial position between the first 17 and the second region 18 until the complete expansion of the first radially expandable region 17.

Therefore, the provisional restraining element 19 is a resilient spacer element, i.e. deformable, following the achievement of a predetermined axial force (i.e. thrust).

In the preferred version herein described and illustrated, the provisional restraining element 19 comprises one or more tabs or resilient arms 19a, radially extended between the first 17 and the second region 18, preferably between the first region 17 and the median region 15 of the casing 10.

Therefore, in the clamping position, with deformed tabs 19a, the first region 17 (with lower diameter D1) is partially housed in the median region 15 (with greater diameter D2).

The term "resilient" indicates, in the spirit of the present invention, that the structure and/or composition of the tabs 19a is such that upon reaching a predetermined axial force acting between the first 17 and the second region 18, mutually approaching, said tab deforms or breaks, allowing a displacement of the first region 17 towards the second 18.

Therefore, the resilient tabs 19a can be either flexible or frangible.

In the preferred embodiment, said tabs 19a are flexible, which allows to obtain a complete reversibility of the axial movement between the first 17 and the second region 18.

Alternatively, however, tabs 19a may be frangible, resulting also functional and conceptually similar to the previous, at least for the first use.

The tie rod 23 is also extended along the longitudinal axis Y, between a head 24 and a free end 25, and is preferably made of metallic material.

The tie rod 23 is received inside the casing 10 having limited possibilities of sliding along the longitudinal axis Y between a release position, in which the tie rod 23 is displaced towards the first end 11, and a locking position in which the tie rod 23 is more displaced towards the second end 12.

The tie rod 23 includes a first segment 26 in enlarged section susceptible of engagement with the first region 17 to determine the radial expansion of the casing 10 when the tie rod 20 is moved in the locking position.

Furthermore, the tie rod 20 includes a second segment 27 in enlarged section susceptible of engagement with the second region 18 to determine the radial expansion of the casing 10 when the tie rod is moved in the locking position.

Preferably, the first segment 26 is formed in correspondence of the free end 25, opposite to the head 24, while the second segment 27 is defined on a median segment 28 of the tie rod 20.

Preferably, the first segment 26 has a conical profile conformation, progressively tapered starting from the free end 25 towards the head 24, and susceptible to encounter the tabs 17a.

In the preferred embodiment here described, the second segment 27 has a wedge-shaped conformation, i.e. preferably defined by a pair of inclined planes 27a, 27b, tapered toward the head 24, which may encounter the tabs 18a.

Thanks to the conformation of the tabs 17a, 18a and of the segments in enlarged section 23 and 24, when the tie rod 20 is axially moved in locking position, tabs 17a and 18a are swung in opposite angular directions.

The eccentric element 30 is received inside the casing 10, in correspondence of its second end 12, with possibility of rotation around its main axis X, perpendicular to the longitudinal axis Y. The eccentric element 30 is in fact located in the housing portion 13 of the casing.

Such eccentric element 30, preferably made of metallic material, is thus housed inside the casing 10 and arranged to engage the head 24 of the tie rod 23 so as to axially move it towards the locking position following a rotation of the eccentric element 30 around the main axis X.

Therefore, the eccentric element 30 has a lower bulk than the casing and is integrated to it, defining with it and the tie rod a single device, movable and storable individually.

Note that, in the preferred embodiment, the eccentric element 30 has substantially cylindrical shape, extending between two bases 31, 37 along the main axis X, preferably with slightly convex side walls.

To favour the eccentric rotation of the element 30 around the main axis X, on a base 31 of the eccentric element 30 a seat 32 for a manoeuvring tool, such as a screwdriver has been obtained in a position aligned with the main axis X.

This base 31 is thus abutted to the first half-shell 10a in correspondence of the housing portion 13 and at least the seat 32 is facing externally with respect to the hole 14 or through opening.

Preferably, the eccentric element 30 defines internally a guide for the head 24 of the tie rod 23, more preferably a reversible drive.

More precisely, the eccentric element 30 is shaped to act reversibly in thrust on the head 24 of the tie rod 23 both in a first direction, towards the locking position, and in a second direction opposite to the first, towards the release position.

In particular, inside the eccentric element 30 there is a seat for receiving 36 the head 24 delimited by a first segment 33 and a second active segment 35 located on the opposite sides of the head 24 of the tie rod 23 and configured to encounter said head respectively as a result of a rotation of the eccentric element 30 around the axis X in a first direction or in a second direction, opposite to the first.

Therefore, the eccentric element includes a first active segment 33 engageable with the head 24 of the tie rod 23 and shaped to impart to the tie rod 23 an axial offset from the release position to the locking position following a rotation of the eccentric element 30 in a first rotating direction. Moreover, the eccentric element 30 includes a second active segment 35 engageable with the head 24 of the tie rod 23 and shaped to impart to the tie rod 23 an axial offset from the locking position to the release position following a rotation of the eccentric element 30 in a second rotating direction, in opposition to the first.

Advantageously, in this way the head 24 of the tie rod 23 is always "guiding", i.e. it is constantly engageable by the eccentric element 30 allowing the reversibility of the expansion operation.

In the preferred embodiment, the first active segment is defined by a cam surface 33, formed on a curved projection 34, capable of encountering the head 24. The cam surface has a progressively decreasing distance from the main axis X, so that when the eccentric element 30 is rotated around the main axis X in a first rotating direction, the head 24 is dragged towards the inner part of the eccentric element 30, axially moving the tie rod 23 toward the locking position.

The head 24 advantageously has a U-shape with the concavity facing the main axis X. In addition, on the head 24 an extended countersink 24a in the direction of the main axis X and facing the base 31 is obtained.

Thanks to at least one of these characteristics, possible interferences with the tip of a manoeuvring tool used to rotate the eccentric element 30 and engaged in the seat 32 are avoided.

In accordance with this embodiment, the second active portion is preferably defined by an abutment element 35, capable of encountering the head 24 on the opposite side of the cam surface 33, in order to axially move the tie rod 23 away from the locking position when the eccentric element 30 is rotated around the main axis X in the direction opposite to the first rotating direction.

In the embodiment as described herein, the abutment element 35 is formed by an axially extended cylinder in an offset position with respect to the main axis X.

Preferably, the eccentric element 30 is formed by a first 30a and a second half-part 30b coupled together by means of one or more male-female couplings, in which the head 24 of the tie rod 23 is received in engagement.

More precisely, the first half-part 30a extends along the X axis from the base 31 and has at least a first coupling portion 31a with the second half-part.

Similarly, the second half-part 30b is developed from a second base 37, opposite to the first, approaching the first half-part 30a and having at least one second coupling portion 37a with the second half-part.

In the preferred embodiment, the coupling portions of the half-parts 30a, 30b of the eccentric element 30 are defined by at least one projection coupled by insertion with a corresponding recess or opening, such that the two half-parts 30a, 30b are bound to rotation.

Therefore, the head 24 of the tie rod 23 is interposed between the first 30a and the second half-part 30b, defining in fact two connectable shells. Preferably, therefore, the first 30a and the second half-part 30b are shaped so as to define between them the receiving seat 36 of the head 24 of the tie rod 23.

More precisely, the first 30a and the second half-part 30b have respective opposing faces featuring reciprocal excavated portions, facing each other so as to define the receiving seat of the head 24 of the tie rod 23 (as well as the first 33 and the second active portion 35 aforementioned). Preferably, moreover, the first 10a or the second half-shell 10b of the casing feature an identification element 40 visible by a user.

In the illustrated embodiment, the identification element 40 is defined by an arrow 40a oriented along the Y axis and placed in the median region 15 of the half-shell 10a, aimed preferably towards the hole 14 or opening for the eccentric element manoeuvre.

Object of the present invention is, as already discussed above, also a method for the production of a connecting device between components of a piece of furniture, preferably of a device 1 of the type described heretofore and claimed below.

Therefore, unless otherwise expressly indicated, all what already reported about the device 1 can be used or reported, *mutatis mutandis,* in relation to the method.

The method initially provides the preparation of the casing 10, the eccentric element 30 and of the tie rod 24, assembling them later. Preferably, the casing 10 is arranged in open position, with the half-shells 10a, 10b put side by side, more preferably with the concavity of the half-shells 10a, 10b facing upwards.

Structurally, this casing 10 is disposed on a plane, or retained by means of a gripping element 106.

In particular, the first half-shell 10a is retained by the gripping element 106 or support element so that the second half-shell 10b is projecting at least in part from said gripping element 106.

Subsequently, the first half-part 30a of the eccentric element 30 is inserted or lodged in the housing portion 13 of the first half-shell 10a.

The base 31 is thus facing the outside (and preferably housed in) the hole 14 or through opening.

The second half-part 30 of the eccentric element 30b is then bound to the first 30a, preferably by coupling the respective coupling portions 31a, 37a. Note that, preferably, previously or simultaneously to the setting down of the first half-part 30a the method provides a step of orientation of the same in order to place it in a predetermined mounting position.

Similarly, also the orientation of the second half-part 30b is checked, and possibly corrected, prior or simultaneously to the setting down of the first half-part 30a.

Therefore, the mounting position of the first half-part 30a preferably corresponds to the mounting position of the second half-part 30b, which therefore generally defines a mounting position of the eccentric element 30.

Note that, preferably, the mounting position of the eccentric element 30 corresponds to the release position of the tie rod 23.

In this respect, the method provides the setting of the tie rod 23 in the first half-shell 10a, preferably by housing the in part the head 24, at least partially, in the first half-part 30a of the eccentric element 30.

After that, the second half-part 30b of the eccentric element 30 is bound (to rotation) with the first 30a, by coupling the eccentric element 30 with the tie rod 23.

The phase of coupling between the rod 23 and the eccentric element is therefore performed in two following steps, a first one in which the head 24 is housed in (and partially coupled with) the first half-part 30a and a second one in which the second half-part 30b is engaged with the first half-part 30a, receiving and coupling the tie rod.

Note that, in alternative embodiments, the coupling between the eccentric element 30 and the tie rod 23 may be performed separately, by housing the eccentric element/tie assembly already set in the first half-shell 10a (or in the second 10b).

Once inserted the eccentric element 30 and the tie rod 23 in the first half-shell 10a, the method according to the present invention provides the implementation of a tilting step of the second half-shell 10b around the (tilting) axis from the open position to the closed position, in which the half-shells 10a, 10b are mutually abutted in correspondence of respective peripheral edges B and the respective concavities defining the housing space for the tie rod 23 and the eccentric element 30.

As already mentioned, the connecting line A (and therefore the tilting axis) is placed in correspondence of the second end 12 of the casing 10, which is interposed between the two housing portions 13a, 13b of the eccentric element 30, and is oriented transversely to said longitudinal axis Y. Therefore, the method preferably triggers a pusher member 104 on the outer surface of the second half-shell 10b, preferably near the first end 11, or the median region 15, to tilt the second half-shell 10b rotating on the first 10a.

Furthermore, the method provides, alongside or immediately downstream of the tilting phase, a closing step of the casing 10 by (preferably reversible) coupling the first 10a and the second half-shell 10b.

In accordance with the above disclosure, the closing operation is performed by pressing the second half-shell 10b on the first half-shell 10a so as to trigger the means of quick coupling 20.

Preferably, moreover, it is provided a quality check phase, in which by means of suitable display means (or possibly via the intervention of relevant staff) it is detected the identification element 40 and their position is compared with a reference position.

More precisely, the control stage provides a verification of the presence and/or the orientation of the seat 32 of the base 31 of the eccentric element 30.

Furthermore, such control phase provides a verification step of the presence of the identification element 40. These phases can be contextual and combined.

If comparisons are positive, the now complete device 1 is sent to a collection area.

If comparisons are negative, the device is sent to a waste area.

In order to implement the method described heretofore, an apparatus 100 for manufacturing a connecting device is preferably used.

This apparatus 100 includes several stations arranged in succession, in which special operating means perform the steps of the method.

In particular, the apparatus 100 includes:
- A power supply station 101 of the casing 10 in open position;
- A supply unit 102 of the eccentric element 30 and the tie rod 24;
- A tilting station 103 provided with the above mentioned pusher member 104;
- A movement unit 105 provided with at least one movable gripping element 106 between the units 101, 105 and configured to retain the first half-shell 10a of the casing 10 with its concavity facing upwards.

Preferably, the supply unit 102 includes several respective stations, in particular at least one eccentric element supply station 107 and one tie rod supply station 108.

More precisely, the eccentric element supply station 107 is divided into two substations 107a, 107b between which the tie rod supply station 108 is preferably interposed.

A first substation 107a, placed operatively upstream of the tie rod supply station 108, is configured to supply the power to the movement unit 105, and in particular to the gripping element 106, at least a first half-part 30a of the eccentric element 30.

A second substation 107b, placed operatively downstream of the tie rod supply station 108, is configured to supply the power to the movement unit 105, and in particular to the gripping element 106, at least a second half-part 30b of the eccentric element 30.

Therefore, each station 101, 103, 107, 108 is preferably provided with a release device (not shown) configured to remove the respective component (casing 10, the eccentric element 30 or rod 23) and set it down on the gripping element 106.

Preferably, the tilting station 103 comprises at least a first pusher member 104a adapted to tilt the second half-shell 10b around the axis A and a second pusher member 104a configured to press the second half-shell 10b on the first half-shell 10a so as to abut its peripheral edges B in closed position and trigger the means of quick coupling 20.

In these embodiments, the tilting station may be divided into two, or a single pusher member could perform both tilting and closing operations.

Preferably, each release device comprises a handling element (not shown) configured to impart to the respective component (casing 10, eccentric element 30 or tie rod 23) a predetermined orientation and place it in correspondence of the gripping element 106.

The movement unit 105 is thus configured to move the gripping element 106 into a plurality of operating positions, each associated to a respective station 101, 103, 107, 108.

In the preferred embodiment, in order to limit the overall bulks, the movement unit 105 includes a rotary table 105a and the stations 101, 103, 107, 108 are angularly spaced around it.

Preferably, the table 105a is provided with a plurality of pockets 106a for the housing of the casing 10, in particular at least of the first half-shell 10a, each defining a gripping element 106.

In the preferred embodiment, the pockets 106a (and the stations 101, 103, 107, 108) are equally angularly spaced from each other in order to simplify the handling and the control of the apparatus 100.

The invention achieves the intended objects and achieves important advantages.

In fact, the manufacturing of a connecting device starting from a monolithic casing divided into two mutually pivoted half-parts makes the assembly very easy, impacting on the costs as well as on the times of the production.

This characteristic is decisive if one considers that the two half-shells of the casing feature a different geometry, which would certainly make the device assembly as well as the following quality check much more difficult, advantageously allowing, thanks to the solution object of the present invention, to focus only on the internal details of the device (i.e. eccentric element, etc.).

Furthermore, the possibility of enclosing the eccentric element as well as the tie rod inside the casing makes the connecting device substantially universal, i.e. suitable for panels of any thickness, and easy to manage from a logistic point of view (unique code, unique component in the catalogue, etc.).

Of particular importance for the efficiency of the assembly method claimed herein, is the presence of means of quick coupling between the two half-shells placed in two distinct points, on opposite sides of the tie rod, and interposed between the two expandable regions, maximizing the sealing effect in the area where the stress on the opening half-shells is greater.

## Claims

1. A connecting device between components of a piece of furniture, including
- A casing (10) developing along a longitudinal axis (Y) between a first end (11) capable of being received in a first seat (4) obtained in a first component (2) of said piece of furniture and a second end (12) capable of being received in a second seat (5) obtained in a second component (3) of said piece of furniture, said casing comprising a first (17) and a second radially expandable regions (18) to engage the components (2, 3) of the piece of furniture, in correspondence of respectively the first (4) and the second seat (5),
- A tie rod (23) housed inside said casing (10) with axial sliding power towards and from a locking position and shaped to determine a radial expansion of said first (17) and second radially expandable regions (18) of the casing (10) when said tie rod (23) is moved to said locking position;
- An eccentric element (30) housed in said casing (10) and arranged to engage a head (24) of said tie rod (23) so as to axially move said tie rod (23) towards said locking position when said eccentric element (30) rotates around its main axis (X),
wherein said casing (10) includes a first (10a) and a second half-shell(10b), both concave, extending along said longitudinal axis (Y) and rotatably connected to each other in correspondence of a mutual connecting line (16) defining a tilting axis (A) around which said half-shells (10a, 10b) can pivot between an open position, in which the half-shells (10a, 10b) are put side by side, and a closed position, in which the half-shells (10a, 10b) are reciprocally abutted in correspondence of their peripheral edges (B) and the respective concavities define a housing space for said tie rod (23) and said eccentric element (30),
**characterized in that** said connecting line (16) is located in correspondence of said second end (12) and transversely oriented towards said longitudinal axis (Y).

2. A connecting device according to claim 1, **characterized in that** said first (10a) and second half-shell (10b) extend both along the longitudinal axis (Y) between said first (11) and second end (12) and each one includes:
- A housing portion (13a, 13b) of the eccentric element (30) placed in correspondence of the second end (12);
- A half-part of said first radially expandable region (17) in correspondence of the first end (11);
- A half-part of said second radially expandable region (18) placed in correspondence of a median region (15) between said first (11) and said second end (12).

3. A connecting device according to any of the previous claims, **characterized in that** said half-shells (10a, 10b) comprise means of quick coupling (20) adapted to keep them in closed position.

4. A connecting device according to claim 3, **characterized in that** said means of quick coupling (20) comprise at least one quick coupling (21) defined by an elastically deformable pawl (21) erecting from the first half-shell (10a) and at least one corresponding receiving seat (21b) of said pawl obtained in the second half-shell (10b).

5. A connecting device according to claim 4, **characterized in that** said means of quick coupling (20) comprise two quick couplings (16) located on opposite sides of said longitudinal axis Y.

6. A connecting device according to any one of claims 3 to 5, **characterized in that** said means of quick coupling (20) are interposed between said first (17) and said second radially expandable region (18).

7. A connecting device according any of the previous claims, **characterized in that** said first (10a) or said second half-shell (10b) include two radial protrusions (22) obtained from sides opposite to the longitudinal axis (Y), and mutually extending away to define a directional portion which can be inserted in a corresponding milling (F) made in the first (2) and/or in the second component (3) of the piece of furniture.

8. A method for the production of a connecting device for the components of a piece of furniture, **characterized in that** it comprises the steps of:
- Preparation of a casing (10) extending along a longitudinal axis (Y) and provided with a first (10a) and a second half-shell (10b) both concave and mutually rotatably connected in correspondence of a reciprocal connecting line (16) defining a tilting axis (A), in which said half-shells (10a, 10b) are mutually put side by side with the respective concavities facing upwards;
- Provision of at least a tie rod (23);
- Provision of at least one eccentric element (30);
- Insertion of said eccentric element (30) in said first half-shell(10a), in correspondence of a predetermined portion of the housing;
- Insertion of the said tie rod in said first half-shell (10a);
- Coupling between a head (24) of said tie rod (23) and said eccentric element (30);
- Tilting of the second half-shell (10b) around said axis (A) from said open position to a closed position, in which the half-shells (10a, 10b) are mutually abutted in correspondence of their peripheral edges (B) and the respective concavities define a closed housing space for said tie rod (23) and said eccentric element (30),
**characterized in that** said connecting line (16) is located in correspondence of said second end (12) and transversely oriented towards said longitudinal axis Y.

9. A method according to claim 8, **characterized in that** said preparation step of the casing (10) comprises at least one retention phase of the first half-shell (10a) by means of a gripping element (106) or support element, wherein said second half-shell (10b) is projecting at least in part from said gripping element (106).

10. A method according to any of claims 8 to 9, **characterized in that** said tilting phase is carried out by at least one pusher member acting on an outer surface of the second half-shell (10b).

11. A method according to any of claims 8 to 10, **characterized in that** it comprises a closing step of said casing (10) later o simultaneously performed to said tilting step.

12. A method according to claim 11, **characterized in that** said half-shells (10a, 10b) comprise means of quick coupling (20) adapted to keep them in closed position; said closing step being performed by pressing the second half-shell (10b) on the first (10a) in order to trigger said means of quick coupling (20).

13. A method according to any of claims 8 to 12, **characterized in that** said insertion of the eccentric element (30) in the first half-shell (10a) includes an insertion phase of a first half-part (30a) of the eccentric element (30) in said housing portion (13a) and a step of coupling of a second half-part (30b) of the eccentric element (30) with said first half-part (30a), in which the insertion phase of the tie rod (23) is interposed between the insertion of the first half-part (30a) and the coupling of the second half-part (30b).

14. A method according to claim 13, **characterized in that** said first (30a) and said second half-part (30b) of the eccentric element (30) respectively comprise a first (31a) and a second coupling portion (37a) mutually engageable; said preparation step of the eccentric element (30) comprising at least the following substeps:
- Orientation of the first half-part (30a) so that the first coupling portion (31a) is in a predetermined mounting position;
- Orientation of the second half-part (30b) so that the second coupling portion (37a) can be coupled with said first coupling portion (31a).

15. A method according to any of the previous claims, **characterized in that** said eccentric element (30) and said first half-shell (10a) of the casing (10) comprise respective identification portions; said method comprising a quality check step in which said identification portions are detected and their position compared with a reference position.

## Patentansprüche

1. Verbindungsvorrichtung zwischen Komponenten eines Möbelstücks einschließend
- ein Gehäuse (10), das sich entlang einer Längsachse (Y) zwischen einem ersten Ende (11), das in einem ersten Sitz (4) untergebracht werden kann, der in einer ersten Komponente (2) des Möbelstücks erhalten wird, und einem zweiten Ende (12) entwickelt, das in einem zweiten Sitz (5) untergebracht werden kann, der in einer zweiten Komponente (3) des Möbelstücks erhalten wird, wobei das Gehäuse einen ersten (17) und einen zweiten radial ausdehnbaren Bereich (18) zum Eingriff mit den Komponenten (2, 3) des Möbelstücks jeweils an dem ersten (4) und dem zweiten Sitz (5) umfasst,
- eine Zugstange (23), die in dem Gehäuse (10) mit axialer Gleitkraft hinführend zu und von einer Verriegelungsposition aufgenommen wird und so geformt ist, dass sie zu einer radialen Ausdehnung des ersten (17) und des zweiten radial ausdehnbaren Bereichs (18) des Gehäuses (10) führt, wenn die Zugstange (23) in die Verriegelungsposition bewegt wird;
- ein exzentrisches Element (30), das in dem Gehäuse (10) aufgenommen und angeordnet ist, um mit einem Kopf (24) der Zugstange (23) in Eingriff zu treten, um die Zugstange (23) axial hinführend zur Verriegelungsposition zu bewegen, wenn das exzentrische Element (30) sich um seine Hauptachse (X) dreht,
wobei das Gehäuse (10) eine erste (10a) und eine zweite Halbschale (10b) einschließt, die beide konkav sind und sich entlang der Längsachse (Y) erstrecken und drehbar miteinander an einer gegenseitigen Verbindungslinie (16) verbunden sind, die eine Kippachse (A) definiert, um die die Halbschalen (10a, 10b) zwischen einer offenen Position, in der die Halbschalen (10a, 10b) nebeneinander gelegt werden, und einer geschlossenen Position schwenkbar ist, in der die Halbschalen (10a, 10b) an ihren Umfangskanten (B) gegenseitig aneinander anliegen, und die jeweiligen Ausnehmungen definieren einen Aufnahmeraum für die Zugstange (23) und das exzentrische Element (30),
**dadurch gekennzeichnet, dass** sich die Verbindungslinie (16) an dem zweiten Ende (12) befindet und quer zur Längsachse (Y) ausgerichtet ist.

2. Verbindungsvorrichtung nach Anspruch 1, **dadurch gekennzeichnet, dass** sich sowohl die erste (10a) als auch die zweite Halbschale (10b) entlang der Längsachse (Y) zwischen dem ersten (11) dem zweiten Ende (12) erstrecken und eine jede einschließt:
- einen Aufnahmeabschnitt (13a, 13b) des exzentrischen Elements (30), der an dem zweiten Ende (12) platziert ist;
- einen halben Teil des ersten radial ausdehnbaren Bereichs (17) an dem ersten Ende (11);
- einen halben Teil des zweiten radial ausdehnbaren Bereichs (18), der an einem mittleren Bereich (15) zwischen dem ersten (11) und dem zweiten Ende (12) platziert ist.

3. Verbindungsvorrichtung nach einem der vorhergehenden Ansprüche, **dadurch gekennzeichnet, dass** die Halbschalen (10a, 10b) Schnellkupplungsmittel (20) umfassen, die ausgelegt sind, um sie in geschlossener Position zu halten.

4. Verbindungsvorrichtung nach Anspruch 3, **dadurch gekennzeichnet, dass** die Schnellkupplungsmittel (20) mindestens eine Schnellkupplung (21), die durch eine elastisch verformbare Klinke (21) gebildet wird, die sich aus der ersten Halbschale (10a) aufrichtet und mindestens einen entsprechenden Empfangssitz (21b) der Klinke, der in der zweiten Halbschale (10b) erhalten wird, umfassen.

5. Verbindungsvorrichtung nach Anspruch 4, **dadurch gekennzeichnet, dass** die Schnellkupplungsmittel (20) zwei Schnellkupplungen (16) umfassen, die sich auf gegenüberliegenden Seiten der Längsachse Y befinden.

6. Verbindungsvorrichtung nach einem der Ansprüche 3 bis 5, **dadurch gekennzeichnet, dass** die Schnellkupplungsmittel (20) zwischen dem ersten (17) und dem zweiten radial ausdehnbaren Bereich (18) angeordnet sind.

7. Verbindungsvorrichtung nach einem der vorhergehenden Ansprüche, **dadurch gekennzeichnet, dass** die erste (10a) oder die zweite Halbschale (10b) zwei radiale Vorsprünge (22) einschließen, die von Seiten entgegengesetzt zur Längsachse (Y) erhalten werden und sich voneinander wegführend erstrecken, um einen Richtungsabschnitt zu definieren, der in ein entsprechendes Fräsen (F) eingeführt werden kann, das in der ersten (2) und/oder in der zweiten Komponente (3) des Möbelstücks gemacht ist.

8. Verfahren zur Herstellung einer Verbindungsvorrichtung für die Komponenten eines Möbelstücks, **dadurch gekennzeichnet, dass** es die folgenden Schritte umfasst:
- Vorbereiten eines Gehäuses (10), das sich entlang einer Längsachse (Y) erstreckt und mit einer ersten (10a) und einer zweiten Halbschale (10b) versehen ist, die beide konkav sind und an einer gegenseitigen Verbindungslinie (16) drehbar miteinander verbunden sind, wobei eine Kippachse (A) definiert ist, in der die Halbschalen (10a, 10b) nebeneinander mit den jeweiligen Ausnehmungen gelegt werden, die nach oben weisen;
- Bereitstellen von mindestens einer Zugstange (23);
- Bereitstellen von mindestens einem exzentrischen Element (30);
- Einführen des genannten exzentrischen Elements (30) in die erste Halbschale (10a) an einem vorbestimmten Abschnitt des Gehäuses;
- Einführen der genannten Zugstange in die erste Halbschale (10a);
- Kuppeln zwischen einem Kopf (24) der Zugstange (23) und dem ekzentrischen Element (30);
- Kippen der zweiten Halbschale (10b) um die Achse (A) von der offenen Position in eine geschlossene Position, in der die Halbschalen (10a, 10b) an ihren Umfangskanten (B) gegenseitig aneinander anliegen und die jeweiligen Ausnehmungen einen geschlossenen Aufnahmeraum für die Zugstange (23) und das exzentrische Element (30) definieren,
**dadurch gekennzeichnet, dass** die Verbindungslinie (16) sich an dem zweiten Ende (12) befindet und quer zur Längsachse Y ausgerichtet ist.

9. Verfahren nach Anspruch 8, **dadurch gekennzeichnet, dass** der Vorbereitungsschritt des Gehäuses (10) mindestens eine Haltephase der ersten Halbschale (10a) mittels eines Greifelements (106) oder Stützelements umfasst, wobei die zweite Halbschale (10b) mindestens teilweise von dem Greifelement (106) vorsteht.

10. Verfahren nach einem der Ansprüche 8 bis 9, **dadurch gekennzeichnet, dass** die Kippphase durch mindestens ein Schieberelement ausgeführt wird, das auf eine Außenfläche der zweiten Halbschale (10b) wirkt.

11. Verfahren nach einem der Ansprüche 8 bis 10, **dadurch gekennzeichnet, dass** es einen Schließschritt des Gehäuses (10) umfasst, der später oder gleichzeitig mit dem Kippschritt ausgeführt wird.

12. Verfahren nach Anspruch 11, **dadurch gekennzeichnet, dass** die Halbschalen (10a, 10b) Schnellkupplungsmittel (20) umfassen, die ausgelegt sind, um sie in der geschlossenen Position zu halten; wobei der Schließschritt durch Drücken der zweiten Halbschale (10b) an der ersten (10a) ausgeführt wird, um die Schnellkupplungsmittel (20) auszulösen.

13. Verfahren nach einem der Ansprüche 8 bis 12, **dadurch gekennzeichnet, dass** die Einführung des ekzentrischen Elements (30) in die erste Halbschale (10a) eine Einführungsphase eines ersten Halbteils (30a) des ekzentrischen Elements (30) in dem Aufnahmeabschnitt (13a) und einem Schritt zum Kuppeln eines zweiten Halbteils (30b) des ekzentrischen Elements (30) mit dem ersten Halbteil (30a) einschließt, in dem die Einführungsphase der Zugstange (23) zwischen der Einführung des ersten Halbteils (30a) und dem Kuppeln des zweiten Halbteils (30b) angeordnet ist.

14. Verfahren nach Anspruch 13, **dadurch gekennzeichnet, dass** der erste (30a) und der zweite Halbteil (30b) des exzentrischen Elements (30) jeweils einen ersten (31a) und einen zweiten Kupplungsabschnitt (37a) umfassen, die miteinander in Eingriff bringbar sind; wobei der Vorbereitungsschritt des exzentrischen Elements (30) mindestens die folgenden Unterschritte umfasst:
- Ausrichten des ersten Halbteils (30a), so dass der erste Kupplungsabschnitt (31a) in einer vorbestimmten Montageposition liegt;
- Ausrichten des zweiten Halbteils (30b), so dass der zweite Kupplungsabschnitt (37a) mit dem ersten Kupplungsabschnitt (31a) gekuppelt werden kann.

15. Verfahren nach einem der vorhergehenden Ansprüche, **dadurch gekennzeichnet, dass** das exzentrische Element (30) und die erste Halbschale (10a) des Gehäuses (10) jeweilige Identifikationsabschnitte umfassen; wobei das Verfahren einen Qualitätsprüfungsschritt umfasst, in dem die Identifizierungsabschnitte erfasst werden und ihre Position mit einer Referenzposition verglichen werden.

## Revendications

1. Dispositif de liaison entre des éléments d'un meuble, incluant
- une enveloppe (10) se développant le long d'un axe longitudinal (Y) entre une première extrémité (11) pouvant être reçue dans un premier siège (4) obtenu dans un premier élément (2) dudit meuble et une seconde extrémité (12) pouvant
être reçue dans un second siège (5) obtenu dans un second élément (3) dudit meuble, ladite enveloppe comprenant une première (17) et une seconde zone (18) radialement extensibles pour se mettre en prise avec les éléments (2, 3) du meuble, en correspondance, respectivement des premier (4) et second siège (5),
- un tirant (23) logé à l'intérieur de ladite enveloppe (10) ayant une puissance axiale de coulissement vers et d'une position de blocage et façonné pour déterminer une extension radiale desdites première (17) et seconde zones (18) radialement extensibles de l'enveloppe (10) lorsque ledit tirant (23) est déplacé vers ladite position de blocage ;
- un élément excentrique (30) logé dans ladite enveloppe (10) et disposé pour se mettre en prise avec une tête (24) de ledit tirant (23) de sorte à déplacer axialement ledit tirant (23) vers ladite position de blocage lorsque ledit élément excentrique (30) tourne autour de son axe principal (X),
dans lequel ladite enveloppe (10) inclut une première (10a) et une seconde demi-coque (10b), toutes deux concaves, se prolongeant le long dudit axe longitudinal (Y) et reliées réciproquement en rotation en correspondance d'une ligne de liaison (16) mutuelle définissant un axe d'inclinaison (A) autour duquel lesdites demi-coques (10a, 10b) peuvent pivoter entre une position d'ouverture, dans laquelle les demi-coques (10a, 10b) sont mises côte à côte, et une position de fermeture, dans laquelle les demi-coques (10a, 10b) se mettent réciproquement en butée en correspondance de leurs bords périphériques (B) et les concavités respectives définissent un espace de logement pour ledit tirant (23) et ledit élément excentrique (30), **caractérisé en ce que** ladite ligne de liaison (16) est située en correspondance de ladite seconde extrémité (12) et transversalement orientée vers ledit axe longitudinal (Y).

2. Dispositif de liaison selon la revendication 1, **caractérisé en ce que** lesdites première (10a) et seconde demi-coques (10b) se prolongent toutes deux le long de l'axe longitudinal (Y) entre ladite première (11) et ladite seconde extrémité (12) et chacune incluant :
- une partie de logement (13a, 13b) de l'élément excentrique (30) placée en correspondance de la seconde extrémité (12) ;
- une moitié de ladite première zone (17) radialement extensible en correspondance de la première extrémité (11) ;
- une moitié de ladite seconde zone (18) radialement extensible en correspondance d'une zone médiane (15) entre ladite première (11) et ladite seconde extrémité (12) .

3. Dispositif de liaison selon l'une quelconque des revendications précédentes, **caractérisé en ce que** lesdites demi-coques (10a, 10b) comprennent des moyens d'accouplement rapide (20) adaptés pour les maintenir dans la position de fermeture.

4. Dispositif de liaison selon la revendication 3, **caractérisé en ce que** lesdits moyens d'accouplement rapide (20) comprennent au moins un accouplement rapide (21) défini par un cliquet (21) déformable élastiquement se dressant de la première demi-coque (10a) et au moins un siège de réception (21b) correspondant dudit cliquet obtenu dans la seconde demi-coque (10b).

5. Dispositif de liaison selon la revendication 4, **caractérisé en ce que** lesdits moyens d'accouplement rapide (20) comprennent deux accouplements rapides (16) situés sur des côtés opposés dudit axe longitudinal Y.

6. Dispositif de liaison selon l'une quelconque des revendications de 3 à 5, **caractérisé en ce que** lesdits moyens d'accouplement rapide (20) sont interposés entre ladite première (17) et ladite seconde zone (18) radialement extensibles.

7. Dispositif de liaison selon l'une quelconque des revendications précédentes, **caractérisé en ce que** ladite première (10a) ou ladite seconde demi-coque (10b) inclut deux saillies radiales (22) obtenues à partir des côtés opposés à l'axe longitudinal (Y) et se prolongeant en s'éloignant mutuellement pour définir une partie directionnelle pouvant être introduite dans un usinage (F) correspondant réalisé dans le premier (2) et/ou le second élément (3) du meuble.

8. Procédé de fabrication d'un dispositif de liaison pour les éléments d'un meuble, **caractérisé en ce qu'**il comprend les étapes de :
- préparer une enveloppe (10) se prolongeant le long d'un axe longitudinal (Y) et pourvue d'une première (10a) et d'une seconde demi-coque (10b) toutes deux concaves et reliées mutuellement en rotation en correspondance d'une ligne de liaison (16) réciproque définissant un axe d'inclinaison (A), dans lequel lesdites demi-coques (10a, 10b) sont mutuellement placées côte à côte avec les concavités respectives orientées vers le haut ;
- prévoir au moins un tirant (23) ;
- prévoir au moins un élément excentrique (30) ;
- introduire ledit élément excentrique (30) dans ladite première demi-coque (10a), en correspondance d'une partie prédéterminée du logement ;
- introduire ledit tirant dans ladite première demi-coque (10a) ;
- effectuer un accouplement entre une tête (24) de ledit tirant (23) et ledit élément excentrique (30) ;
- incliner la seconde demi-coque (10b) autour dudit axe (A) de ladite position d'ouverture à une position de fermeture, dans lequel les demi-coques (10a, 10b) se mettent mutuellement en butée en correspondance de leurs bords périphériques (B) et les concavités respectives définissent un espace de logement fermé pour ledit tirant (23) et ledit élément excentrique (30),
**caractérisé en ce que** ladite ligne de liaison (16) est située en correspondance de ladite seconde extrémité (12) et transversalement orientée vers ledit axe longitudinal Y.

9. Procédé selon la revendication 8, **caractérisé en ce que** ladite étape de préparation de l'enveloppe (10) comprend au moins une phase de retenue de la première demi-coque (10a) au moyen d'un élément de préhension (106) ou élément de support, dans lequel ladite seconde demi-coque (10b) dépasse au moins en partie dudit élément de préhension (106).

10. Procédé selon l'une quelconque des revendications de 8 à 9, **caractérisé en ce que** ladite phase d'inclinaison est réalisée par au moins un poussoir agissant sur une surface extérieure de la seconde demi-coque (10b) .

11. Procédé selon l'une quelconque des revendications de 8 à 10, **caractérisé en ce qu'**il comprend une étape de fermeture de ladite enveloppe (10) réalisée après ou simultanément à ladite étape d'inclinaison.

12. Procédé selon la revendication 11, **caractérisé en ce que** lesdites demi-coques (10a, 10b) comprennent des moyens d'accouplement rapide (20) adaptés pour les maintenir dans la position de fermeture ; ladite étape de fermeture étant réalisée en pressant la seconde demi-coque (10b) sur la première (10a) afin d'enclencher lesdits moyens d'accouplement rapide (20).

13. Procédé selon l'une quelconque des revendications de 8 à 12, **caractérisé en ce que** ladite introduction de l'élément excentrique (30) dans la première demi-coque (10a) inclut une phase d'introduction d'une première moitié (30a) de l'élément excentrique (30) dans ladite partie de logement (13a) et une étape d'accouplement d'une seconde moitié (30b) de l'élément excentrique (30) à ladite première moitié (30a), dans lequel la phase d'introduction du tirant (23) est interposée entre l'introduction de la première moitié (30a) et l'accouplement de la seconde moitié (30b).

14. Procédé selon la revendication 13, **caractérisé en ce que** ladite première (30a) et ladite seconde moitié (30b) de l'élément excentrique (30) comprennent respectivement une première (31a) et une seconde partie d'accouplement (37a) se mettant en prise mutuellement ; ladite étape de préparation de l'élément excentrique (30) comprenant au moins les sous-étapes suivantes :
- orienter la première moitié (30a) de sorte que la première partie d'accouplement (31a) se trouve dans une position de montage prédéterminée ;
- orienter la seconde moitié (30b) de sorte que la seconde partie d'accouplement (37a) puissent être couplée à ladite première partie d'accouplement (31a).

15. Procédé selon l'une quelconque des revendications précédentes, **caractérisé en ce que** ledit élément excentrique (30) et ladite première demi-coque (10a) de l'enveloppe (10) comprennent des parties d'identification respectives ; ledit procédé comprenant une étape de vérification de la qualité dans laquelle lesdites parties d'identification sont détectées et leur position comparée à une position de référence.
